# EUROPEAN PATENT APPLICATION

(11) **EP 1 280 063 A2**
(43) Date of publication of application: **29.01.2003**
(21) Application number: 02255261.6
(22) Date of filing: 26.07.2002
(51) Int. Cl.: G06F 12/08

(54) **Cache control methods and apparatus for hard disk drives**

(30) Priority: 27.07.2001 US 308424 P
(71) Applicant: FUJITSU LIMITED, Kawasaki-shi, Kanagawa 211-8588 (JP)
(72) Inventor: Hirao, Yuichi, Tokyo (JP); Yoneyama, Koji, Kawasaki, Kanagawa (JP); Hori, Kazuyuki, Kawasaki, Kanagawa (JP); Olbrich, Aaron, Morgan Hill, California 95037 (US); Prins, Douglas, Laguna Hills, California 92653 (US); Hatakeyama, Shigeru, Kawasaki, Kanagawa (JP)
(74) Representative: Hitching, Peter Matthew

(57) **Abstract**

Data to be retrieved from a non-volatile storage medium is identified by considering previously stored cache data in a cache buffer is disclosed. When a request for data is received from a host, the requested data is ear-marked for retrieval, with a desired amount of pre-read data and a desired amount of pre-fetch or read-ahead data. It is then determined whether any of the data is already in the cache buffer, and how much of a gap, if any, exists between the desired data and that already stored in the cache buffer. If some of the data is already in cache, then a controller has to satisfy the read request with a single continuous retrieval of data from the storage medium, such that the data as stored in the cache buffer is not interrupted by gaps within the cache buffer. In this manner, buffer usage rate is increased while maintaining the same cache hit rate in a particular access pattern to evaluate hard disk drive performance. In another aspect of the invention, the amount of pre-read and pre-fetch data can also be adjusted to decrease the number of times the read head misses the data read start point and is forced to wait for the disk to rotate a revolution to begin reading.

## Description

This invention relates to cache control methods for hard disk drives used in computers, and more particularly to control methods for hard disk drives that search for and use data already stored in a cache buffer for read command execution.

Hard disk drives are used in most computers for non-volatile storage of data. Hard disk drives basically write data to a magnetic, optical or magneto-optical storage medium in response to write commands, and read data from the storage medium in response to read commands. While modern hard disk drives operate very quickly, retrieving data from the storage medium is still relatively slow when compared with the speed of other parts of the computer system. This is caused in large part because hard disk drives have certain mechanical and electromechanical systems which limit the potential processing speed of the hard disk drive.

In addition to a non-volatile storage medium, modern hard disk drives have an internal central processing unit (CPU), random access memory (RAM) that is used by the CPU primarily for control operations, and a cache buffer that temporarily stores data to be written to and read from the storage medium. The cache buffer is volatile memory, and operates very quickly. Nonetheless, read commands are executed by reading from the storage medium, which slows the response time due to the relatively slow speed of the mechanical systems in the device. Thus, one object of this invention is to provide hard disk drives that respond more quickly to read commands.

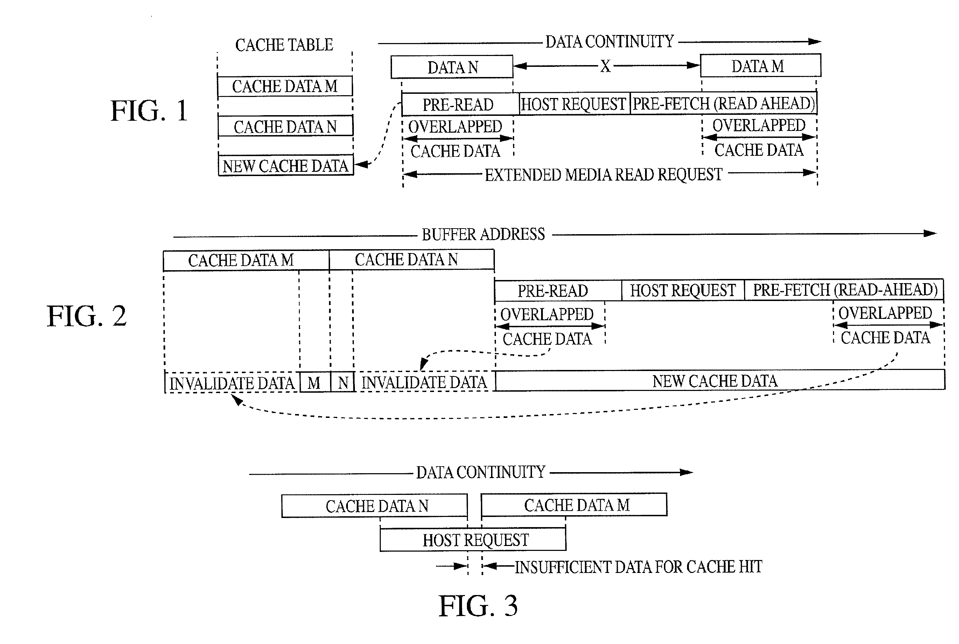

In known methods for managing a cache buffer, redundant data is stored in the cache buffer when a new data request is executed that requests data already stored in the cache buffer. For example, in FIG. 1, data N and data M are stored in different physical areas of a disk or other non-volatile storage medium, separated by a space X. The data M and N are stored in the cache buffer and registered in a cache table as cache data M and cache data N.

When a host request is directed to data in the space X, the disk drive typically retrieves the data within the host request, and in addition retrieves a certain amount of data preceding the host request, known as pre-read data, and an amount of data following the requested data, known as pre-fetch (Read-ahead) data. The pre-read, host request and pre-fetch data (Extended media read request in FIG. 1), are then stored in cache and registered in the cache table as New Cache data. It is apparent from FIG. 1, however, that portions of the New Cache data and portions of the cache data M and N are stored twice (in two places) in the cache buffer, which is inefficient.

Duplicate or overlapped data in cache data M and N could be invalidated or deleted, as in Fig. 2, but then the New Cache data is stored in piecemeal fashion, which is undesirable. Thus, it is an object to provide control methods for cache buffers which execute host requests by considering previously stored cache data in the cache buffer and avoiding piecemeal storage of data in cache, to improve performance of the disk drive.

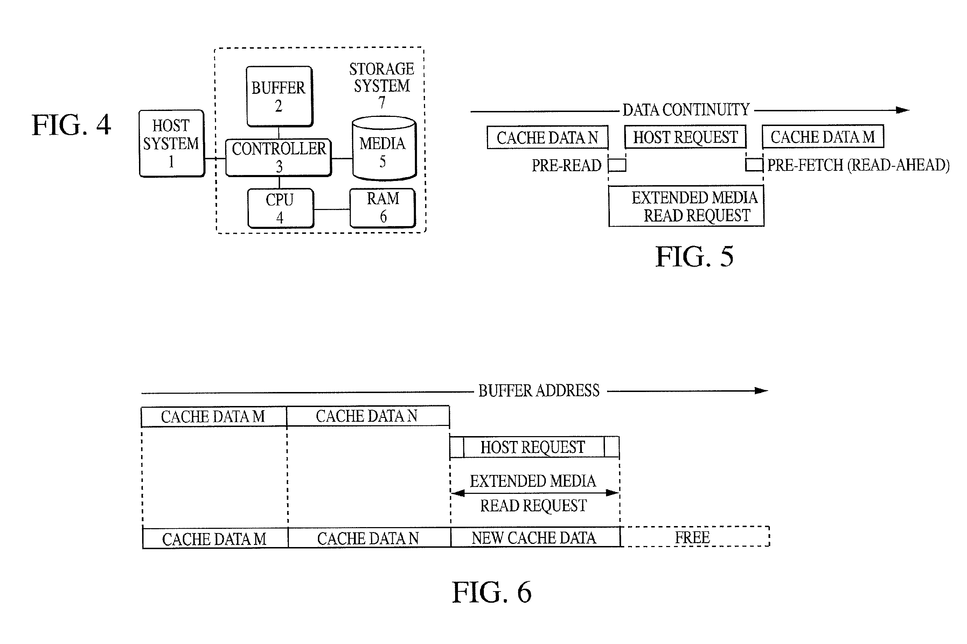

Referring to FIG. 3, it can be seen that even though there is adjacent cache data that covers part of the host read request, some of the data covered by the request is not in the cache data M and N in the cache buffer, so the host request cannot be satisfied by simply retrieving data from cache, i.e., making a cache hit. This is because even though cache data M and N are adjacent and close each other, data in a gap between the cache data M and N is not read out from a storage medium through a pre-read and/or pre-fetch for the cache data M and N. Accordingly, another object is to improve the cache hit rate by increasing the buffer usage rate.

The disk in a hard disk drive rotates continuously at a high speed, and the read head is moved across the disk in a radial direction to read different data stored on the disk. If the read head arrives at a selected track after the data start point has passed the read head, the head must wait until the disk rotates up to a revolution before the reading process can begin. This further degrades the performance of the disk drive. Yet another object of this invention is to improve performance in this regard.

In keeping with one aspect of this invention, data to be retrieved from a non-volatile storage medium is identified by considering previously stored cache data in a cache buffer. When a request for data is received from a host, the requested data is ear-marked for retrieval, with a desired amount of pre-read data and a desired amount of pre-fetch or read-ahead data. It is then determined whether any of the data is already in the cache buffer, and how much of a gap, if any, exists between the desired data and that already stored in the cache buffer. If some of the data is already in cache, then a controller satisfies the read request with a single continuous retrieval of data from the storage medium, such that the data as stored in the cache buffer is not interrupted by gaps within the cache buffer. In this manner, buffer usage rate is increased while maintaining the same cache hit rate in a particular access pattern to evaluate hard disk drive performance.

In another aspect of the invention, the amount of pre-read and pre-fetch data can also be adjusted to decrease the number of times the read head misses the data read start point and is forced to wait for the disk to rotate a revolution to begin reading.

Reference will now be made, by way of example, to the accompanying drawings, in which:
Fig. 1 is a diagram describing data retrieval in a conventional hard disk drive.
Figs. 2 and 3 are additional diagrams showing data retrieval in a hard disk drive.
Fig. 4 is block diagram of a hard disk drive.
Figs. 5 and 6 are diagrams showing data retrieval from a hard disk drive.
Figs. 7-12 are diagrams showing data retrieval from a hard disk drive under various circumstances.
Fig. 13 is a diagram showing data retrieval from a hard disk drive.
Figs. 14A and 14B are a flowchart used for data retrieval according to the present invention.
Figs. 15 and 16 are diagrams of a disk describing data retrieval under various circumstances.
Figs. 17-19 are diagrams of a hard disk describing data retrieval under various circumstances.

As seen in FIG. 4, a typical computer system includes a host system 1 and a storage system 7. The host system 1 issues write requests to the storage system 7 in order to store data, and issues read requests to retrieve the stored data. The storage system 7 includes a cache buffer 2, a controller 3, a CPU 4, at least one non-volatile storage medium 5 and RAM 6. The storage medium 5 could be magnetic, optical or magneto-optical disk, or a tape. It is also contemplated that the cache buffer 2 could be in the host system 1 instead of the storage system 7.

The controller 3 receives the read and write commands and transfers data into the cache buffer 2 under certain circumstances. In storing write data, sufficient empty area in the cache buffer is secured so that the write data can be stored sequentially whenever possible. In other words, the write data is preferably stored in order, without empty spaces in the cache buffer. The cache buffer can include separate logical or physical areas or buffers for read use only and write use only, or a single logical memory may share read and write operations.

Cache information corresponding to data in the cache buffer is registered in the ram 6 or in a section of the cache buffer 2. The CPU 4 manages the transfer and registration operations. The CPU 4 also controls the controller 3, and decides when to write data from the cache buffer into the storage medium 5.

Data is typically not written to the storage medium 5 immediately when a write command is received. For this reason, when the host system 1 issues a read request to the storage system 7, the CPU 4 searches for the requested data in the cache information in RAM 6. When the requested data is already stored in the cache buffer 2, there is a cache hit, and data in the cache buffer 2 is immediately transferred to the host system 1, instead of reading the data from the storage medium 5. This transfer operation can be performed when unwritten data (i.e., data that has not yet been written to the storage media 5) is present. Moreover, cache data subject to such cache hits may have been stored in the buffer based either on a read request or a write request. Furthermore, the controller 3 may execute various operations, from the search operation to the data transfer operation.

When it is not possible to retrieve all of the requested data from the cache buffer, i.e., when there is no cache hit, the amount of data to be read from the storage medium 5 is expanded to include not only the requested data, but pre-read data and read-ahead data, as well. Then the requested data and the additional data is read from the storage medium 5 and stored in the cache buffer for transfer to the host system 1. In doing so, cache information corresponding to the data stored in the cache buffer 2 is registered in the RAM 6.

When a read request is received, the controller first refers to the cache table to determine whether the requested data is already in the cache buffer. If all of the data is in the buffer, the data is read through a cache hit, without reading data from the storage media. However, if even a small portion of the data is not in the cache buffer, as in Fig. 4, for example, the missing data must be read from the storage media.

Where a read request is issued from a host system, the extent of the host data transfer request is defined as the extent of a medium read request. Cache information is searched, then it is determined whether adjacent data continuous with the requested data is held in the cache buffer. Where host requested data causes a cache hit to cache data as a whole or partially, hit data is transferred from the cache buffer to a host system, and remaining data other than the hit data is redefined as medium read request data. Where there are cache data adjacent to data of the host read request, a distance (herein after called a gap) between the medium read request data and the adjacent cache data is obtained. Then, where the gap is not large, the medium read request extent is expanded to include such adjacent cache data. A buffer area covering the gap is secured, the expanded extent of data of the expanded medium read request is read out from the medium, and is stored into a cache space. The cache information is registered. Finally, host requested data in the cache buffer is transferred. Where there is no adjacent cache data or where a gap is large, the expanded extent of medium data read request is determined based upon a predetermined value in the same manner as the prior art. By using this method, buffer usage rate improves since the same data is not redundantly stored in the cache buffer area, and read hit rate improves. The performance of the device improves since cache data are not scatteredly stored in the cache buffer, and since cache data as a whole is held as continuous data.

Specific cases of the present invention are described with reference to drawings.

Fig. 5 shows a diagram for explaining a way that a pre-read amount and a pre-fetch amount for the host request data are determined. In general, an extent of data to be read out from a storage medium in accordance with a host request for data is determined in light of data present in a cache buffer. This way is used when a cache hit cannot be made for the host request data since the host request data as a whole is not found in the cache buffer through a buffer search operation.

First, cache data in the cache buffer is searched based upon the host request data. The cache buffer search is made on a cache information table by using the logical address of the host request data. Through the cache buffer search, cache data M and N adjacent to the host request data in terms of the logical address of the data are identified. Then, a first gap in terms of the logical address of data between the host request data and the forwardly adjacent cache data N, and a second gap in terms of the logical address of data between the host request data and the backwardly adjacent cache data M, are calculated. The value of the first gap is set as a pre-read amount, and the value of the second gap is set as a pre-fetch amount. The pre-read amount, the host request data extent, and the pre-fetch amount constitute an Extended media read request. Where based upon the Extended media read request, data is read out from a storage medium, and buffer usage amount can be reduced drastically while maintaining a cache hit rate. Since data is only read out from the storage medium so as to fill the first gap and the second gap, this method is called Read-Gap-Fill. Further, since data is read out such that the gaps are filled without storing overlapping data, data to be stored in the cache buffer is continuous in terms of logical addresses of data, so it is also possible to avoid storing data in piecemeal fashion. Thus, the read hit rate can be improved. Furthermore, if the pre-read amount is smaller than a predetermined amount for a typical pre-read, and/or a pre-fetch amount is smaller than a predetermined amount for a typical pre-fetch, since the time of the mechanical movement, e.g. head movement relative to the storage medium, for reading data from the storage medium can be lowered, the performance of the disk drive can be improved. Furthermore, in this method, the pre-read amount and the pre-fetch amount to the host request data are variable dependent upon the first gap and the second gap, respectively.

The storage media must be read if sufficient pre-read data and pre-fetch (read ahead) data in addition to the requested data are not in the cache buffer, as seen in Fig. 5. While the length of the pre-read and pre-fetch data can be adjusted in some cases, as will be seen, some pre-read and pre-fetch data is preferred, so the pre-read data between the cache data N and the host request is obtained from the storage media. Among other things, this creates continuity in the cache buffer from the cache data N through the host request itself. The pre-fetch data between the host request and the cache data M is also retrieved from the storage media, which creates continuity between the host request data and the cache data M in the buffer.

While it is preferable to store data continuously in the cache buffer, i.e., without gaps in the buffer, it is not necessary that the stored data itself be continuous in the cache buffer, as seen in Fig. 6. In Fig. 6, the Extended media read request of Fig. 5 is stored in the cache buffer. The cache data M is stored first, followed by the cache data N and the new cache data required to complete the desired Extended media read request. This leaves a free area in the buffer of Fig. 6. In this manner, overlapped data is avoided, without creating gaps in the cache buffer. This provides more continuous open or available memory space in the cache buffer. Furthermore, it is possible to avoid storing the data in piecemeal fashion in comparison with the method of Fig. 2, because it is not necessary that overlapped portions in old cache data M and N be invalidated or deleted if there are remaining gaps for new and non-continuous data.

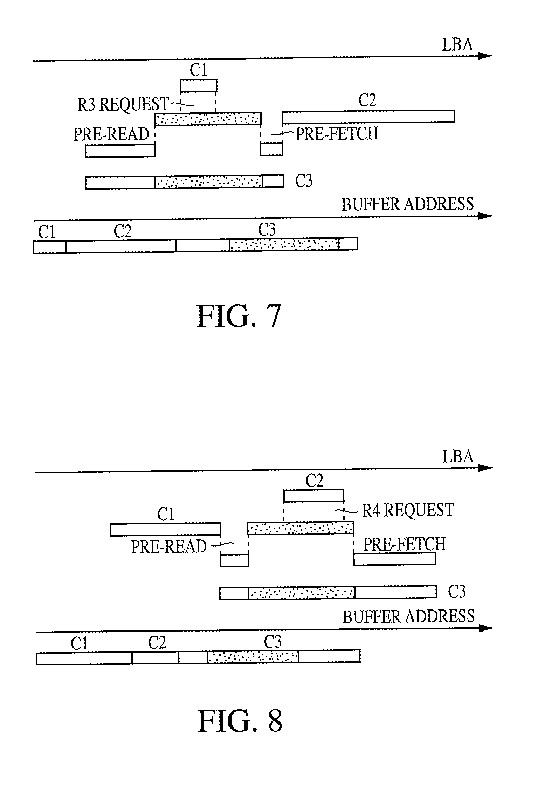

Storage of data in the cache buffer without gaps may be accomplished in several ways. In Fig. 7, for example, data block C1 is first stored in the buffer, followed by C2. Fig. 7 shows a case in which a host request for data R3 is fully extended over cache data C1 present in the cache buffer. There is a gap between the host request data R3 and a cache data C2 present in the cache buffer. In Fig. 7, C1 and C2 are continuous in the buffer in terms of buffer address, but discontinuous in the storage medium. The logical addresses of data C1 and the C2 are also discontinuous, even though they are relatively close each other.

When a read request R3 is received, the controller searches for the data requested in the buffer, not including pre-read and pre-fetch data. If through the buffer search, the controller can not make a cache hit, namely the data requested as a whole cannot be found in the buffer, then a buffer search for finding adjacent cache data is executed. In Fig. 7, through the search, the cache data C1 is detected as backwardly adjacent cache data and the cache data C2 is identified as forwardly adjacent cache data. In this situation, a pre-read amount cannot be obtained since there is no backwardly adjacent cache data. Then, a predetermined amount is set as a pre-read data to the host request R3. Regarding a pre-fetch data, the amount corresponding to the gap is set as the pre-fetch data for the host request R3. As the Extended media read request, the total of the pre-read data and the host request R3 and the pre-fetch data is calculated. Based upon that calculation, data C3 is read out from a storage medium, and is stored in the cache buffer, as shown in Fig. 7, if a space immediately after the cache data C2 is available or secured to the data C3. Thereafter, the overlapped cache data C1 is deleted or discarded or the cache information for the cache data in a cache information table is invalidated. Here, it is not required that C 1 and C2 be continuous in the buffer. It is better if there are enough spaces after the cache data C1 in buffer that can store the total amount of the predetermined pre-read data, the host request data, and the pre-fetch data.

In this case, after calculating the gaps to be filled, the pre-read data, all of the data requested (R3) and the pre-fetch data are read from the storage medium and stored in the buffer as data C3. This does not significantly degrade performance of the disk drive because the data is read continuously from the storage medium. However, since the data C1 is overlapping data because it is included in C3, C1 is then deleted. In this manner, the data in the buffer is continuous from the beginning of C2 to the end of C3, and a free space is available in the buffer where C1 was initially stored.

Fig. 8 shows a case in which a host request R4 is fully spread over cache data C3 present in a cache buffer, with a gap between the host request R4 and a cache data C1 present in the cache buffer. In Fig. 8, a data block C1 is stored in the cache buffer, followed by a data block C2. Again, the data C1 and C2 are stored in a continuous manner in the cache buffer, but they are located at different logical block addresses (LBAs) in the storage medium. As in the other cases, it is assumed that a cache hit for a host request cannot be made. Furthermore, "C1" is defined as a backwardly adjacent cache data to the host request, and "C2" is defined as a forwardly adjacent cache data to the host request.

With respect to a read request R4, the controller searches the cache buffer for existing data, forwardly adjacent cache data and backwardly adjacent cache data to the host request R4. In this case, cache data C1 is found as backwardly adjacent cache data and a gap between the host request R3 and the cache data C1 is calculated as a pre-read data to be filled in the gap. Cache data C2 is found as forwardly adjacent data and is fully covered by request R4, however. As pre-fetch data to the host request R4, the controller applies a predetermined value. Accordingly, the storage media is read to retrieve the pre-read data and the predetermined pre-fetch data. The entire request R4 is also retrieved from the storage media, though, because it is continuous with the other data. Thus, a continuous string of data C3 is recorded in the cache buffer, and C2 is invalidated or deleted.

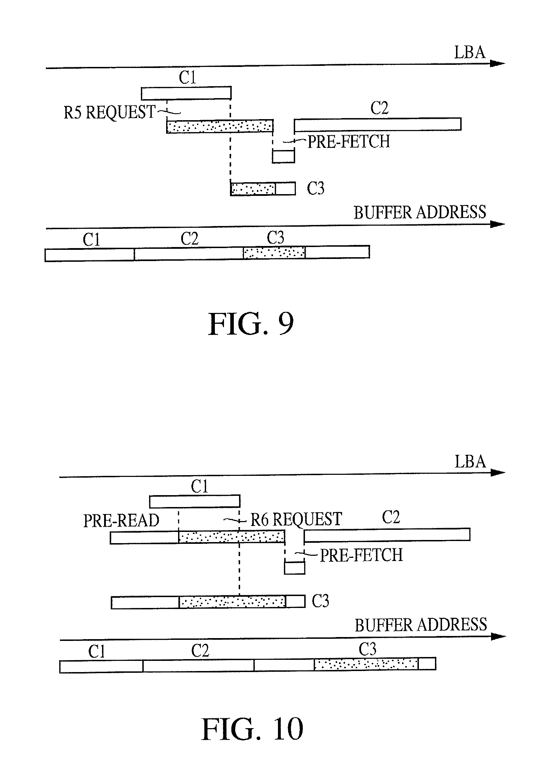

Fig. 9 shows a case in which a host request for data R5 is partially extended over cache data C1 present in a cache buffer, with a gap between the host request data and a cache data C2 present in the cache buffer. In Fig. 9, data C1 is stored in the cache buffer, followed by data C2. Of course, C1 and C2 are stored continuously in the buffer, but they are located at different LBAs in the storage media. With respect to a request R5, the controller determines that a portion of the data requested is partially spread over in the buffer to cache data C1, and there is a gap between the host request R5 and cache data C2. Since there is no gap between R5 and C1, a pre-read value to be filled in the gap cannot be calculated. The controller then calculates the extent of the host request, which overlaps the cache data C1, and transfers the overlapped data of the cache data C1 to the host system as a cache hit. The controller then updates the host request R5 by subtracting the extent read through the cache hit, which has been transferred, from the host request R5. The controller sets a "0" value for the pre-read amount since there is no gap between R5 and C1. It determines a pre-fetch value based upon the gap between R5 and C2. Based upon the updated host request R5 and the determined pre-fetch value, C3 is set. C3 must be retrieved from the storage medium. C3 is then read and stored in the buffer after C2. In this case, there is no overlapped data, so C 1 and C2 are not deleted.

Fig. 10 presents yet another possibility in the case shown in Fig. 9. In Fig. 10, data blocks C1 and C2 are again stored continuously in the cache buffer, though they have different LBAs in the storage media. Through a read request R6, the controller sets a predetermined value for the pre-read amount fully covering C1, since some predetermined pre-read data amount need not be calculated because there is no gap between R6 and C1. As described above, the controller calculates a pre-fetch data amount to the host request R6. In this case, data that precedes C 1 is needed for pre-read data. For this reason, the storage medium is read to retrieve the needed data before C 1 in a continuous manner, and the data is stored in the cache buffer as C3. C1 is then invalidated or deleted to leave continuous data in the cache buffer.

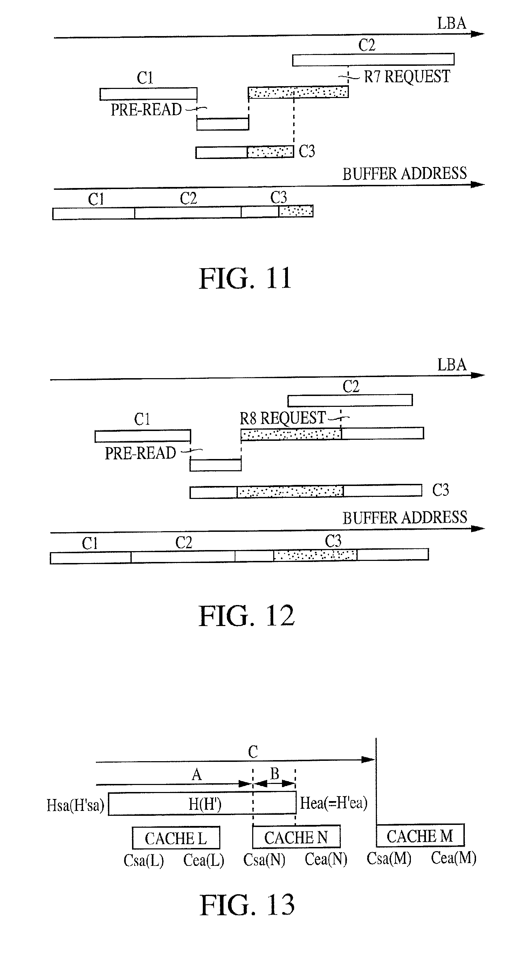

Fig. 11 is similar to Fig. 9, but a read request R7 includes a portion of data C2. In Fig. 11, a host request for data R7 is partially extended over cache data C2 present in a cache buffer and there is a gap between the host request R7 and a cache data C1 present in the cache buffer. Similar to the case of Fig. 9, the controller calculates an extent of the host request, which overlaps the cache data C2, and transfers the overlapped data of the cache data C2 to the host system as a cache hit. The controller then updates the host request R7 by subtracting the extent which has been transferred from the host request R7. The controller sets "0" value for the pre-fetch amount since there is no gap between R7 and C2. It determines a pre-read value based upon the gap between R7 and C1. Based upon the updated host request R7 and the determined pre-fetch value, C3 is set. The gap between C1 and C2, which is continuous, is read from the storage media and stored as C3. In this case, though, C1 and C2 are not deleted because there are no overlaps in the buffer.

Fig. 12 presents yet another possibility in the case shown in Fig. 11. In Fig. 12, the pre-read data is determined based upon the gap between R8 and C1. As the pre-fetch data, a predetermined amount is set. In this case, the LBAs in block C3 are read from the storage medium in a continuous manner. Since C3 covers all of C2, C2 is then deleted from the cache buffer.

In addition to these cases, there are cases in which the conditions include both partially extended over cache data and fully extended over cache data. For example, the following cases are considered such composite cases:
1) where a host request is partially extended over both C1 and C2, namely, the backward end of the host request is partially extended over the forward end of C1 and the forward end of the host request is partially extended over the backward end of C2,
2) where a host request is fully extended over C 1 and is partially extended over C2,
3) where a host request is partially extended over C1 and is fully extended over C2, and
4) where a host request is fully extended over a plurality of C1s or C2s and is fully or partially extended over the opposite end of C1 or C2.

It is possible to resolve these cases by combining the previously described methods. In any case, where data is not directly read out from a storage medium, data in the cache buffer is transferred when a cache hit is made.

The invention can perhaps be better understood with reference to a numerical example. Data continuity is typically controlled by assigning LBA (Logical Block Addresses) in consecutive numbers. Assume that the cache buffer stores information at LBA addresses cache 1:10-19, cache 2:30-39: and cache 3:50-59. Where there is a read request of 25-26 (LBA) from the host system and the cache data is searched, forwardly adjacent cache data, cache 1:10-19 (LBA), and backwardly adjacent cache data cache 2:30-39 (LBA), can be detected. Therefore, the data extent actually read from the storage medium includes pre-read 20-24 (LBA), the host request 25-26 (LBA), and pre-fetch 27-29 (LBA) for a total of data 20-29 (LBA) which can be stored as cache data. As a result, viewing the cache buffer as a whole, data 10-39 (LBA) can be continuously stored in the buffer without having redundant cache data.

Where the host request covers 25-45 (LBA) and the cache is searched, forwardly adjacent cache data is cache 1:10-19 (LBA), and backwardly adjacent cache data is cache 3:50-59 (LBA). Cache 2:30-39 (LBA) is completely covered by the host request. In the present invention, it is possible to precisely control the buffer and divide the media request into two requests, one of which is 20-24 (LBA) and the other of which is 46-49 (LBA). Normally, though, it would be expected to improve performance where cache 2 is deleted and the data of 20-49 (LBA) is read out from the storage medium and stored as cache data in the buffer.

The manner by which these results are obtained can now be more easily understood. When a read request is received from the host, the CPU in the hard drive adds pre-read and pre-fetch data to the requested addresses, and determines whether the data is already in the cache buffer. The search is conducted as follows.

A lead logical address (LBA) of a host request extent is sequentially compared with the end logical addresses of stored cache data extents. Then, an adjacent cache data extent C1 which has the smallest difference between the lead logical address of the host request extent and the end logical address of the stored cache data extent is determined.

Similar to this searching step, an end logical address (LBA) of a host request extent is compared with lead logical addresses of stored cache data extents in order. Then, an adjacent cache data C2 which has the smallest difference between the end logical address of the host request extent and the lead logical address of the stored cache data extent is determined.

Normally, the disk drive holds, in addition to cache data, a table of cache information for managing the cache data. Therefore, cache information is searched to find adjacent cache data C1 and C2, and the cache data itself is not searched. In general, cache information in the table includes, for each segment or extent of cache data, at least the following information:
i) cache status flag (valid, invalid, etc.);
ii) a lead address of data extent;
iii) an end address of data extent;
iv) a lead address of buffer storage location; and
v) an end address of buffer storage location.

Where hardware support, e.g. search engine hardware, etc., is available, it may be possible to search at high speed if a simple form of cache information table is created. Also, referring to Fig 13, the cache information table is searched, with a lead address Hsa of a host request extent H, from a first row of the cache information table to an end row of the cache information table. During the search, the lead address Hsa is compared with lead addresses Csa (n) of all of the stored cache information (n). Where the lead address Hsa is equal to or greater than the lead address Csa of cache information, the lead address Hsa is also compared with an end address Cea of the cache information, of which the lead address Csa of the cache information is determined as being equal to or smaller than the lead address Hsa. If the lead address Hsa is equal to or smaller than the end address Cea, it is determined that the lead address Hsa is present in cache information. In that situation, it is possible to make a cache hit transfer on such a portion. It is not necessary to read the storage medium for such a portion, so such a portion can be transferred to the host system sooner.

Thus, the host request extent H is reduced to a host request extent H'. Then, the search is continued with a lead address Hsa of the host request extent H'. If it is further possible to have a hit transfer, a hit transfer is done, and a new search is created. These steps are repeated unless it is not possible to make a hit transfer. Then, cache data, for which the final hit transfer was made, is determined as a forward adjacent cache data C1.

On the other hand, where such a lead address which can cause a hit transfer is not found, the search is continued. In the search, if it is found that a lead address of a stored cache information is smaller than that of a host request extent, then an end address of the stored cache information is compared with the lead address of the host request extent, and the difference between the end address of the stored cache information and the lead address of the host request extent is calculated and the calculation result is temporarily held in memory. Finding a lead address, comparing the addresses, and calculation of the distance are repeated until a cache data having the smallest value of the calculated distance is found. Where it is found, the cache data is regarded as the forward adjacent cache data C1, and the search for the forward adjacent cache data is terminated.

After the termination of the search of the forward adjacent cache data, cache information is further searched with the end address Hea (or H'ea) of the host request extent H (or H'). In this situation, there are two possibilities. One possibility is that the end address Hea is present in cache, and the second possibility is that the end address Hea is not present in cache. The first possibility will be explained below with reference to Fig. 13, assuming that the first data found is Cache N in Fig. 13.

The detection of the status is carried out through an algorithm. First, the end address Hea of the host request extent is compared with the respective lead addresses Csa (n) of cache information, e.g. Cache L-M. Where the end address Hea is smaller than the lead address Csa (n), Cache (n) having the lead address Csa (n) is set as a candidate for the backward adjacent cache data C2. In the drawing, Cache M is the candidate. Further search is done, and if it is not found that there is Cache (n) having the lead address Csa that is closer than the lead address Csa (M) of Cache (M), the Cache (M) is determined to be the backward adjacent cache data. If it is eventually found that there is Cache (n) having the lead address Csa that is the closet to the end address Hea of the host request extent H, then the Cache (n) is regarded as the backward adjacent cache data. Where the end address Hea is equal to or greater than the lead address Csa (n), the lead address Hsa is compared with the end address Cea (n). Here, where the end address Hea is equal to or smaller than the end address Cea (n), it can be understood that Cache (n) has the status of the first one. In Fig. 13, Cache (N) is in the status of the first one. If the end address Hea is greater than the end address Cea (n), Cache (n) having the greater end address is disregarded, and the search is continued. Such disregarded Cache (n) is Cache L in the drawing. Here, for the status of the first one, it is considered to first read out an extent A from a storage medium, and then the extent B, and make a hit transfer from Cache (N). However, normally, a host system issues many sequential access requests rather than issuing random requests, so it is better to continue to read data from a storage medium which is continuous to a host request extent rather than stopping reading data from a storage medium after reading the extent A. Thus, in this case, a cache which is in the status of the first one is disregarded. Where only detecting the status of the second one, though, it is possible to only compare the end address Hea with the lead address Csa (n). Further, Cache L and Cache (N) are deleted after reading out an extent A from the storage medium and checking the cache information.

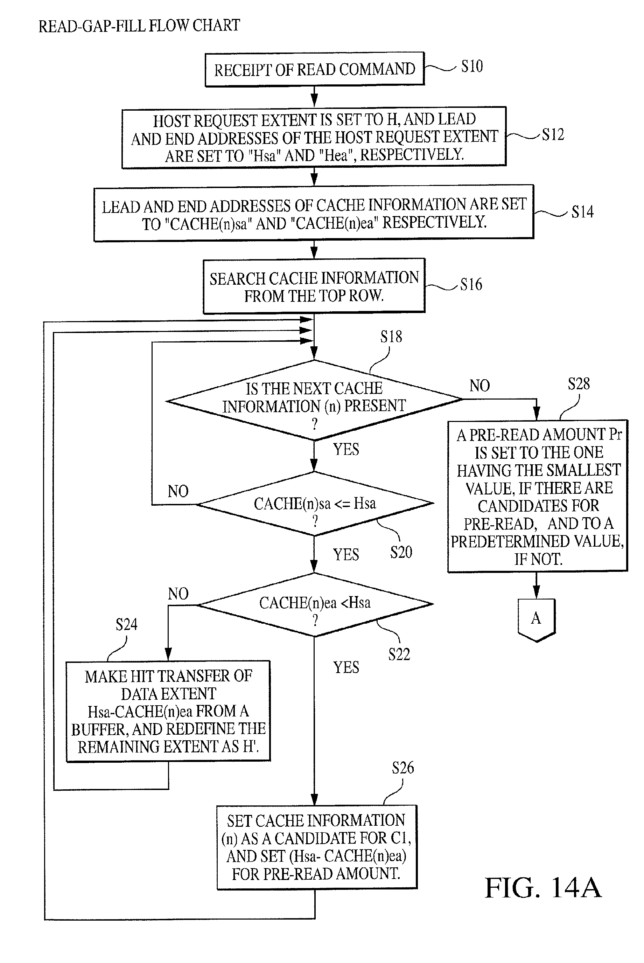

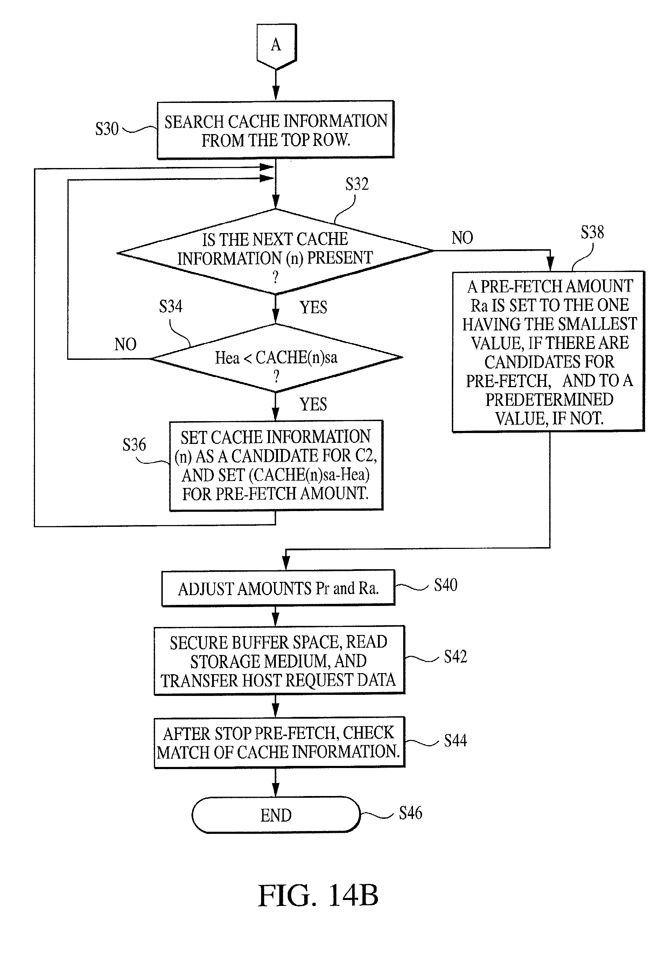

An algorithm for performing this process is shown in Figs. 14A and 14B. On receipt of a read command S10, a host request extent is set to H, and the lead and end addresses of the host request extent are set to Hsa and Hea, respectively (S 12). The lead and end addresses of the existing cache information are set to cache (N)sa and cache (N)ea, respectively (S14). The cache information is then searched from the top row (S16).

The controller determines whether the next cache information (n) is present (S18). If so, it is determined whether cache (n)sa is less than or equal to Hsa (S20). If not, it goes to step S28. If the answer in step S18 is yes, then the algorithm determines whether cache (n) ea is less than Hsa (S22). If not, the algorithm makes a hit transfer of the data extent (Has-Cache (n)ea) from the buffer and redefines the remaining extent as H' (S24). If Yes is obtained at S22, cache information (n) is set as a candidate for C1, and a value (Hsa-Cache (n)ea) is set for the pre-read amount (S26). After step S24 or S26, the routine loops back to S18 until a No response is obtained at step S18. In that event, a pre-read amount Pr is set at the smallest value if there are candidates for pre-read, and to a predetermined value, if not (S28).

Then the cache information is again searched from the top row of a table of cache information (S30). This is accomplished by determining whether the next cache information (n) is present (S32). If so, the algorithm determines whether Hea is less than Cache (n)sa (S34). If not, the routine loops back to step S32 and continues until a Yes response is obtained at S34. If yes at S34, then the cache information (n) is set as a candidate for C2, and a value of (cache (n) sa - Hea) is set for the pre-fetch amount (S36). The routine then loops back to step S32, and continues looping until a No response is obtained at step S32. Then, a pre-fetch amount Ra is set to a minimum value if there are candidates for pre-fetch, and to a predetermined value, if not (S38). Pr and Ra are adjusted at step (S40) in accordance with mechanical characteristics of the device, and buffer space is secured (S42). The storage medium is then read and the host request data is transferred from the storage medium. Then, the pre-fetch is stopped, and the cache information is checked (S44). The routine ends at step (S46).

Additionally, where searching by software instead of dedicated hardware, it may be better to formulate cache information in a binary tree form. In this case, the basic search method is the same as that of the searching method adapted in a case for dedicated hardware.

Furthermore, if it is desired to have high-speed search for filling read gaps, specific management information may be provided and the search may be done by using the specific management information. For example, such specific management information could be a table storing search numbers which are given to each string or block of cache information, a head address and an end address for each cache information block, namely, for each of the search numbers. In searching the forward adjacent cache information and/or the backward adjacent cache information, the stored head addresses and the stored end addresses in the table are searched in the same way as described above.

In the present invention, "adjacent" means the closest even if the distances are large. However, a limited amount of buffer space is available at any given time, and the extent to which the storage medium can be read and its data stored in cache is limited in accordance with the available buffer space when a read command is executed.

For example, assume that a maximum buffer size to be prepared for one request is limited to "100". If it is not so limited, the buffer size corresponds to its actual maximum size. Then, if a host request extent is "10", the distance between the host request extent and the forward adjacent cache data C1 is "50", and the distance between the host request extent and the backward adjacent cache data C2 is "20", in total 80, the required buffer size for preparation for the host request is "80". If cache C1 is not present, the pre-read amount is determined to be "70" based upon the limitation of a maximum buffer size which is "100". Namely, the pre-fetch is equal to "20" which comes from the distance to Cache C2 and a size of the desired host request extent is "10", the amount of the pre-read is calculated by subtracting the pre-fetch "20" and the size of the host request extent "10" from the maximum buffer size "100". Thus, the maximum buffer size "100" is prepared for the host request extent "10", since a size of reading from a storage medium is set to "100" by adding "70" and "20" and "10".

If the distance to Cache C1 is "50" and the distance to Cache C2 is "60", the total size is over the maximum buffer size "100" since the total size is obtained by adding "50" and "60" and "10" for the host request extent. In this case, the pre-fetch is prioritized, and the pre-read is limited to a size "30".

If the distance to Cache C1 is "100" and the distance to Cache C2 is "120", the total size of just the host request extent and the pre-fetch is over the maximum buffer size "100". In this case, the pre-fetch is limited to a size "90" and the pre-read is limited to "0".

However, if adding the pre-read and/or the pre-fetch increases the unnecessary latency time period, namely revolution waiting, the total performance of the disk drive may be lowered. In order to resolve such performance drop, a just-in-time-seek operation becomes a useful tool.

Furthermore, in some host access patterns, e.g. many sequential accesses in the reverse direction, where the pre-read is set to "0", the performance may be lower. In this case, a minimum amount is set as the pre-read amount, so the performance may be improved.

It is known that a storage device has, in a read processing operation, processing speed characteristics in terms of mechanical parameters or time, e.g. seek operation, latency of revolution, etc. Thus, if the amount of expansion of data extent of the medium read request is decided based upon only the present cache information, then it may be required to have an additional processing time, which may result in lowering performance of the device. The expansion amount corresponds to a pre-read amount and a pre-fetch amount.

In such a case, where a read request is issued from a host system, the data extent of the host transfer request is defined as the data extent of the medium read request. The stored cache information is searched based upon this data extent, and it is determined if there is adjacent cache data in terms of data continuity in a cache buffer. Where a host transfer request for data covers data wholly or partially in cache, the host system makes a cache hit to the cache data in the cache buffer, and the data extent that made the cache hit is transferred from the cache buffer to the host system. The remaining data extent, if any, is redefined as a new data extent of a medium read request. Where there is adjacent cache data, a distance (hereinafter called as a gap) between the data extent of the medium read request and the cache data extent in terms of data continuity is calculated. Here, the distance is defined as a first maximum value. Where there is no adjacent cache data, a predetermined value, the amount of which is relatively large, is set as a second maximum value. Next, a positional relationship between a position on the storage medium for data currently under processing or a current position of a reading mechanism, and the data extent of the medium read request is obtained while considering processing operation time on the storage medium, e.g. head movement time. Based upon the relationship information, a limitation value for a pre-read and a pre-fetch is calculated. The first maximum value is compared with the limitation value. If the first maximum value is larger than the limitation value, the limitation value is adapted as a pre-read value or a pre-fetch value. Also, the second maximum value is compared with the limitation value. If the second maximum value is larger than the limitation value, the limitation value is adapted as a pre-read or a pre-fetch value. By incorporating this method, where the next host request is given during calculation of a pre-read value and a pre-fetch value for the present host request, it is possible to avoid increasing a waiting processing time in applying the Read-Gap-Fill function to a device.

As described above, performance of a disk drive can be improved by optimizing the amount of pre-fetch and pre-read data that is retrieved with data included in a host request, where the next host request is given during calculation of a pre-read value and a pre-fetch value for the present host request. It should be noted that if the next host request does not come into a disk drive during processing of the present host request, the optimization process is not required.

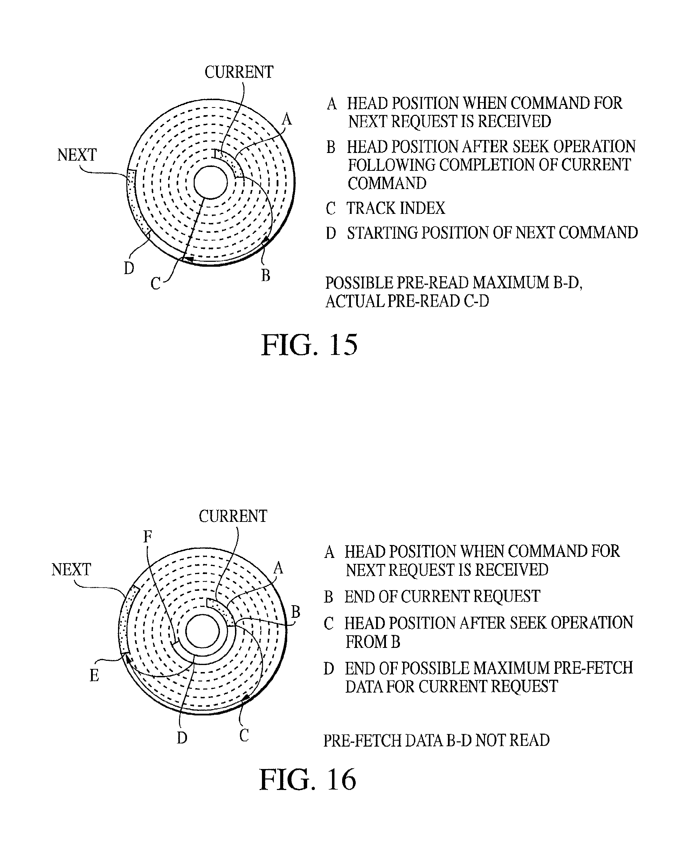

Fig. 15 shows a diagram for explaining a way for determining a pre-read amount where the next host request comes during calculation processing of a pre-read amount for the present host request.

In Fig. 15, a location of a read head that currently reads out data from a disk medium is indicated as a position "A". It is assumed that at the time during which the read head is located at the position "A", the next host request is received by the disk drive, and that after a seek operation from an end position of data of the present host request to a position of a track where data for the next host request is located, the read head moves to a different track at a position "B". Further, it is assumed that an index of the track is located at a position "C", and that the starting position of the next host request is a position "D", and LBA is given from the index "C". In this situation, if a distance B-D is pre-read, LBAs for B-C and LBAs C-D are discontinuous. Then, if a distance C-D is defined as a limitation value for a pre-read amount, registration of cache information can be easily performed.

In Fig. 16, the present location of the read head is indicated at position "A". It is assumed that at the time during which the read head is located at the position "A", the next host request is received by the disk drive at the end of the current request, indicated as position "B", and the start of the next request is at position "E". The head can move to the correct track to read beginning at position "E" by moving to the position indicated at position "C". The position "F" is the end of the predetermined prefetch data for the current request, but if the head cannot reach position "E" from position "F", the prefetch data D-F need not be read. In the alternative, the maximum possible data between B and D can be read, if desired, in order to obtain the maximum possible prefetch data for the current request.

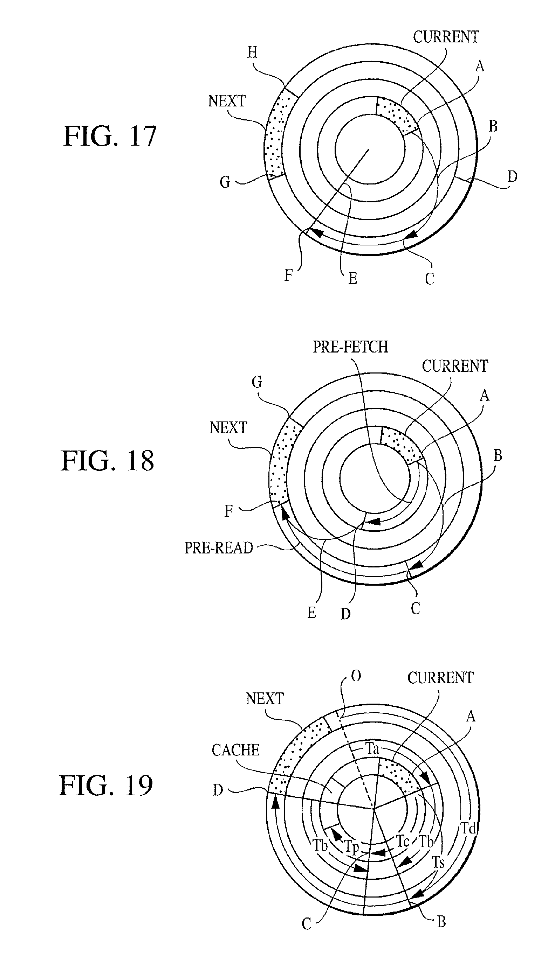

In FIG. 17, for example, the end position of data currently in access to a storage medium is assumed to be "A". If a seek operation from A to a starting position G of a subsequent host transfer request data is carried out in the shortest route, a head movement is assumed to be from A to C. In this situation, where the area from D to G is set as pre-read data (defined as a first maximum pre-read data), by considering previously stored cache data, the head cannot read data from the position D to the position C due to the seek operation time, and it is necessary to wait about one revolution in order to read data from the position D. This increases access time if the pre-read amount is calculated only from the distance to adjacent cache data. On the other hand, in order to avoid this latency time, where the pre-read data is set to an area C-G, if position E is a boundary of data continuity on a track, i.e. the index of a track on a storage medium, the area C-F and the area F-G are discontinuous in terms of address, so control of cache information in storing data from the area C-H into the cache buffer is complex. To simplify the process, a recommended value for the pre-read data is to the area F-G, and the critical limitation value is set to the area C-G. Thus, even if a pre-read data is set to a maximum value for the next host request because there is no adjacent cache data or to a maximum value based upon adjacent cache data, the extent of pre-read data is adjusted based upon the limitation value determined from the mechanical characteristics, so performance of the device is improved.

Furthermore, as the limitation value for the pre-read amount, the MPU may select either a fixed value or a variable value which has smaller value. The fixed value is a maximum value which is used to limit a buffer size to be used in a data transfer operation. The variable value is calculated based upon positions of various data on the storage medium and the position of the read head.

Moreover, as seen in FIG. 18, it is assumed that the end position of a host request data extent is "A". It is assumed that before or during execution of the present host read request, a subsequent host request F-G is identified. Further, a critical position, where a seek operation E to a position F can be accomplished, is assumed to be a position D. Where a value of the pre-fetch data to the current host request is set to more than the area A-D, it is necessary to have about one revolutional waiting time in order to read the area F-G of the next host request. Thus, the area A-D can be defined as a critical limitational value for the pre-fetch data.

However, if the critical value is adapted as the pre-fetch value, the pre-read data extent to the next request can be made zero. Where the next command is a read command, it is necessary to adjust the next pre-read data extent with the pre-fetch extent. Therefore, it is better to adopt or tune a pre-read value and a pre-fetch value to be an optimal or appropriate value by considering the maximum value, the recommended value, and the critical value. Furthermore, depending upon the processing characteristics of the apparatus, it may be that performance can be improved by further refining sequential access. In that case, it is considered to continue a pre-fetch rather than to limit a pre-fetch.

If the storage medium 5 such as disk medium or tape medium has mechanical or electromechanical limitations that also limit performance characteristics, processing time can be decreased by determining whether the requested data is already in cache memory. Adjusting the pre-fetch and pre-read data extent to avoid unnecessary revolutions of the disk or movement of the tape can also increase performance. For example, FIG. 19 shows a method of determining a pre-fetch extent "A". In Fig. 19, the time Ta is the time from a index position O and the timing A, and one mechanical characteristic is the index position "O" on the storage medium. As to the index position "O", continuity of LBA may be disturbed or separated. Where the starting point of the next subsequent request data extent is "D", a seek time from A to D is Ts, which is obtained by searching a seek time table. Here, the seek time table is a corresponding table showing the relationship between seek distance and seek time. If the movement time in the radial direction is changed to a time in the circumferential direction, it is equal to Tb. Thus, the critical value where the pre-fetch from "A" is continued corresponds to a data extent which is the amount to time Tc to the position C. The time Tc is obtained by subtracting Tb and Ta from Td. If the pre-fetch is continued past Tc, it is not possible to seek a position D without having a revolution of the disk.

It is further assumed that the data extent of an adjacent cache data is cache 1. Then, the pre-fetch extent becomes an extent of Tc + Tp. But normally, waiting one revolution degrades performance, so the pre-fetch extent is set to only Tc. In this situation, the extent Tp remains a gap, which may lower the effect of avoiding storing data in a piecemeal manner. Thus, it is necessary to consider whether either increasing processing time or having piecemeal data in cache is more critical to the performance of the device, and then a pre-read amount and a pre-fetch amount are determined based upon the criticality.

Many advantages of this invention are now apparent. Where the control method of this invention is adopted, data is efficiently read-out from the storage medium and is stored in a buffer, and much more cache data can be held in the buffer. Also, piecemeal like cache data can be avoided, so the cache hit rate is improved and performance is also improved. In a particular access pattern, the buffer usage rate is as much as doubled, so the cache buffer can be used more efficiently and access performance of the device such as a disk drive can be improved dramatically.

While the principles of the invention have been described above in connection with specific apparatus and applications, it is to be understood that this description is made only by way of example and not as a limitation on the scope of the invention.

## Claims

1. A method for controlling a cache buffer in a storage system having a storage medium, the storage medium receiving read and write commands from a host, comprising the steps of:
storing first data in the cache buffer in response to a first host command;
executing a second host command, the second host command being a command to read second data from the storage system, by reading the second data from the cache buffer if all of the second data is included in the first data in the cache buffer, if not,
determining an extended request by adding pre-read and pre-fetch data to the second data,
determining whether there is overlap in the cache buffer between the first data and the second data,
determining whether there any gaps in the storage medium between the first data and the second data, and if there are gaps or overlaps,
storing the extended request in the cache buffer by reading one continuous stream of data from the storage medium and storing the extended request in the cache buffer such that the data is stored in the cache buffer without gaps in the cache buffer, and
executing the second command by reading the second data from the cache buffer.

2. The method of claim 1 wherein the storage medium rotates and the extended request is read from the storage medium as it rotates, the method comprising the step of adjusting the amount of pre-read data to reduce the amount of rotation required before reading the extended request.

3. A method for controlling a cache buffer in a storage system having a storage medium, the storage system receiving read and write commands from a host, comprising the steps of:
storing first data in the cache buffer in response to a first host command;
executing a second host command, the second host command being a command to read second data from the storage system, by reading the second data from the cache buffer if some of the second data is included in the first data in the cache buffer;
defining the remaining data in the second data as redefined second data; and
reading the redefined second data from the storage medium.

4. A method for controlling a cache buffer in a storage system having a storage medium, the storage system receiving read and write commands from a host, comprising the steps of:
storing first data in the cache buffer in response to a first host command;
executing a second host command, the second host command being a command to read second data from the storage system, by
determining an extended request by adding a predetermined amount of pre-read and pre-fetch data to the second data;
determining whether any of the first data is included in the extended request and if so, identifying a gap between the first data within the extended request and the second data;
adjusting the extended request to include only the gap;
storing the revised extended request in the cache buffer; and
executing the second command by reading the second data from the cache buffer.

5. A method for controlling a cache buffer in a storage system having a storage medium, the storage system receiving read and write commands from a host, comprising the steps of:
storing first data in the cache buffer in response to a first host command;
establishing a cache information table using the logical addresses of the first data;
executing a second host command, the second host command being a command to read second data from the storage system, by
searching the cache information table to identify data included in the second host command that is already stored in the cache buffer,
identifying a first gap in terms of the logical address of data between the host request data and forwardly adjacent cache data N;
identifying a second gap in terms of the logical addresses of data between the second request data and the backwardly adjacent cache data M;
setting the value of the first gap as a pre-read amount and the value of the second gap as a pre-fetch amount;
identifying the pre-read amount, the second data extent and the pre-fetch amount as an extended request, reading the data in the first gap and the second gap into the cache buffer; and
executing the second command by reading the second data from the cache buffer.

6. A method for controlling a cache buffer in a storage system according to claim 5, wherein if there is duplicate data in the cache buffer, the earlier stored copy of the duplicate data is invalidated.

7. The method of claim 5 or 6 comprising the steps of:
identifying a first maximum value as the gap between the second data and the cache data in terms of data continuity;
identifying a second maximum value as a predetermined value;
measuring the positional relationship between positions on the storage medium for data currently under processing and the extended request;
identifying the processing operation time on the storage medium from the positions;
calculating a limitation value for pre-read and pre-fetch data related to the second data;
comparing the first maximum value with the limitation value of the pre-read and pre-fetch data;
if the first maximum value is larger than the limitation value, adapting the limitation value as a pre-read value or a pre-fetch value; and
comparing the second maximum value with the limitation value, and if the second maximum value is larger than the limitation value, adapting the limitation value as a pre-read or a pre-fetch value;
whereby when a second host request is given during calculation of a pre-read value and a pre-fetch value for a present host request, the waiting processing time in filling the gaps is not increased.

8. A cache algorithm for a hard disk drive having a nonvolatile memory for storing information and a volatile random access cache memory for storing information read from the nonvolatile memory for processing by a host unit and storing information to be written to the nonvolatile memory, the nonvolatile memory storing the information in linear block areas (LBA's), the LBA's being partially or completely filled with information blocks, the cache algorithm comprising:
means for overwriting old LBA's in a buffer when a write that has not been written to disk yet is in the buffer, only when a second write command is received that covers some or all of those LBA's,
means for filling gaps in LBA space when a read command is received that is somewhere in a gap by filling the gap with data read before the requested data and data read after the requested data, and
means for reducing the frequency of writes to the disk in order to increase the frequency of reads from the disk.

9. A method for controlling a cache buffer in a storage system having a rotating storage medium, the storage medium receiving read and write commands from a host, comprising the steps of:
executing a host command, the host command being a command to read first data from the storage system by adding pre-read and pre-fetch data to the first data, the pre-read data being determined in a manner which reduces the amount of rotation required before reading the pre-read, first and pre-fetch data.
